# EUROPÄISCHE PATENTSCHRIFT

(11) **EP 0 646 714 B1**
(45) Veröffentlichungstag und Bekanntmachung des Hinweises auf die Patenterteilung: **04.12.1996**
(21) Anmeldenummer: 94115073.2
(22) Anmeldetag: 24.09.1994
(51) Int. Cl.: F02F 11/00, F16J 15/08, F02F 7/00

(54) **Metall-Flachdichtung**
Metal seal
Dispositif d'étanchéité en métal

(30) Priorität: 02.10.1993 DE 4333691; 28.07.1994 DE 4426792
(43) Veröffentlichungstag der Anmeldung: 05.04.1995
(73) Patentinhaber: ELRING KLINGER GMBH, D-72581 Dettingen (DE); FORD-WERKE AKTIENGESELLSCHAFT, 50735 Köln (DE)
(72) Erfinder: Baudach, Detlev, D-65510 Hunstetten (DE); Weitz, Klaus-Peter, D-42657 Solingen (DE)
(74) Vertreter: Sparing - Röhl - Henseler Patentanwälte

(56) Entgegenhaltungen:
- DE-A- 3 610 541
- FR-A- 2 512 912
- US-A- 2 837 075
- US-A- 2 945 715
- US-A- 3 930 656

## Beschreibung

Die Erfindung betrifft eine Metall-Flachdichtung für zwei mittels Schraubbolzen an ihren Stoßflächen miteinander zu verspannenden Teile insbesondere eines Verbrennungsmotors, mit einem aus einem Metallblech bestehenden Flachdichtungsteil, das eine zu den abzudichtenden Stoßflächen korrespondierende, mit Löchern für die Schraubbolzen versehene Form aufweist und mit wenigstens einem Öffnungsbereich sowie einer den Öffnungsbereich vorzugsweise umgebenden Sicke versehen ist.

Eine derartige als Zylinderkopfdichtung dienende Metall-Flachdichtung ist beispielsweise aus der EP 0 230 804 A1 bekannt, die aus einem mit Löchern für Schraubbolzen zum Verspannen von Motorblock und Zylinderkopf und einer Zylinderöffnung versehenen Metallblechabschnitt besteht, wobei benachbart zum Rand der Zylinderöffnung um diese herumlaufend ein Überhöhungsring aufgeschweißt ist, der von einer umlaufenden Sicke umgeben ist. Der Überhöhungsring soll dabei ein vollständiges Flachdrücken der Sicke vermeiden.

Bei einem Verbrennungsmotor gibt es aber noch weitere Abdichtungsbereiche, beispielsweise ist die Ölwanne gewöhnlich am Motorblock angeflanscht. Hierzu sind entsprechend Stoßflächen vorgesehen, die mit einer Nut zur Aufnahme einer Elastomerdichtung versehen sind. Zwar kann man diese Nut durch spanabhebende Bearbeitung mit großer Genauigkeit herstellen, jedoch ist dies sehr aufwendig, so daß man üblicherweise die Nut beim Gießen der Ölwanne in deren Stoßfläche, die später plan geschliffen wird, ausbildet. Allerdings ergibt sich hierdurch ein hoher Werkzeugverschleiß und ein ungleichmäßiger Nutgrund und es ist eine starke Verpressung notwendig, um die gewünschte Abdichtung mittels einer in die Nut einzulegenden Schnurdichtung, deren Einlegen zudem wegen ihrer Flexibilität etwas umständlich ist, zu erzielen. Außerdem wird am Stirndeckel getrennt eine Weichstoffdichtung eingelegt, um die dort benötigte Abdichtung zu bewirken. Die hierbei vorhandenen sogenannten "T-Stellen", wo die Abdichtung in zwei zueinander senkrechten Ebenen vorzunehmen ist, konnte man bisher nur durch entsprechend weiche flexible Dichtungen und zusätzliche Dichtungsmittelapplikation abdichten. Dies trifft z.B. auch für Ladderframedichtungen sowie bei Deckeldichtungen am vorderen und hinteren Motorenbereich zu.

Aufgabe der Erfindung ist es, eine Dichtung der eingangs genannten zu schaffen, die sich zur T-Stellenabdichtung eignet.

Diese Aufgabe wird dadurch gelöst, daß das Flachdichtungsteil oberflächenbeschichtet und im Bereich von abzudichtenden T-Stellen vorzugsweise in Taschen mit einem plastisch verformbaren Dichtungsmaterial derart beschichtet ist, daß bei der Montage das Dichtungsmaterial in die angrenzenden Bereiche des Flachdichtungsteils gedrückt wird.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.

Fig. 1 zeigt in Draufsicht eine Stirndeckeldichtung für einen Verbrennungsmotor.

Fig. 2 zeigt ausschnittweise eine Draufsicht auf eine Dichtung zur Anordnung zwischen Motorblock und Ölwanne eines Verbrennungsmotors.

Fig. 3 zeigt einen Schnitt längs der Linie III-III von Fig. 1 bzw. 2.

Fig. 4 zeigt einen Schnitt längs der Linie IV-IV von Fig. 1 bzw. 2.

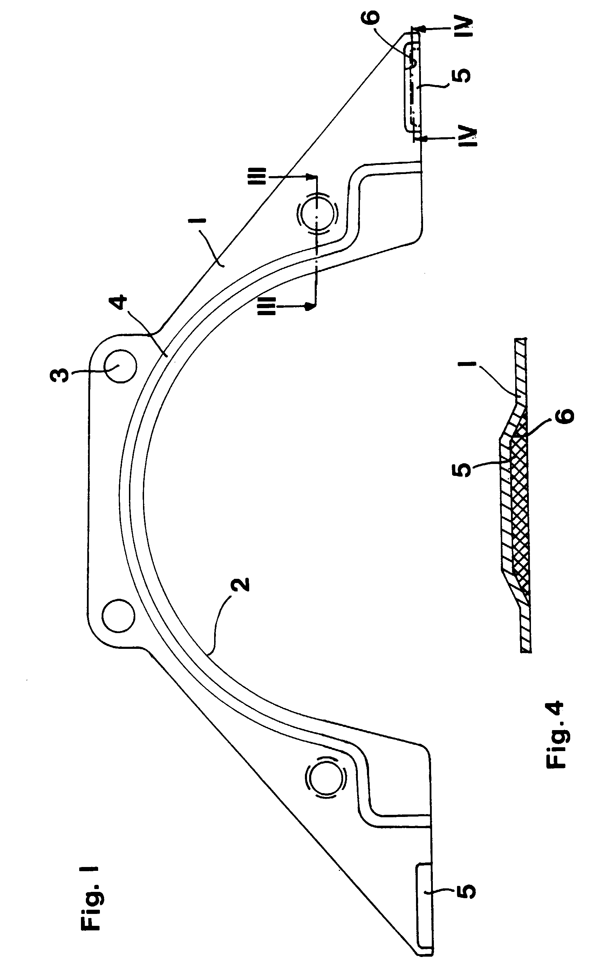

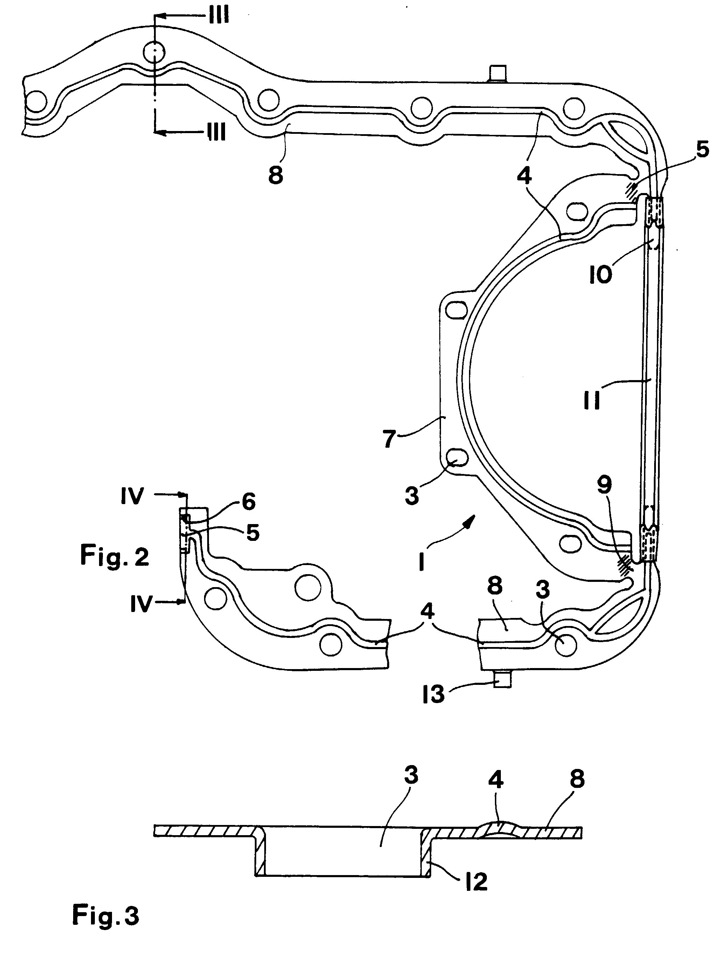

Die in Fig. 1 dargestellte Dichtung umfaßt ein aus einem elastomerbeschichteten, gegebenenfalls elastischen Metallblech, insbesondere Stahl wie Federstahl bestehendes, in etwa dreieckiges Flachdichtungsteil 1 mit einer halbkreisförmigen Öffnung 2 zur Anordnung zwischen einem Stirndeckelflansch und einem Stirndeckel eines Verbrennungsmotors. Das Flachdichtungsteil 1, das eine Form entsprechend den abzudichtenden Stoßflächen besitzt, weist entsprechend der vorgesehenen Anordnung der zur Befestigung des Stirndeckels dienenden Schraubbolzen Löcher 3 auf, wobei im Bereich zwischen den Löchern 3 und der Öffnung 2 vorzugsweise eine durchgehende Sicke 4 angeordnet ist. Das Flachdichtungsteil 1 ist in seinen beiden freien Kantenbereichen zur entsprechenden T-Stellenabdichtung jeweils mit einem plastisch verformbaren Dichtungsmaterial 5 derart beschichtet, daß bei der Montage das Dichtungsmaterial 5, etwa Silikon, in die angrenzenden Bereiche gequetscht wird und dadurch die T-Stelle verschließt, während ansonsten die Sicke 4 durch Flachdrücken eine linienförmige Abdichtung um die halbkreisförmige Öffnung 2 herum bewirkt.

Wie aus Fig. 4 ersichtlich, kann eine Tasche 6 im Kantenbereich des Flachdichtungsteils 1 vorgesehen sein, die das plastisch verformbare Dichtungsmaterial 5 aufnimmt.

Die in Fig. 2 dargestellte Dichtung umfaßt ein aus einem elastomerbeschichteten, gegebenenfalls elastischen Metallblech, insbesondere Stahl wie Federstahl bestehendes, im wesentlichen U- oder O-förmiges Flachdichtungsteil 1. Das Flachdichtungsteil 1 umfaßt einen etwa halbkreisförmigen Mittelabschnitt 7, der praktisch dem Flachdichtungsteil 1 von Fig. 1 entspricht, und zwei sich hiervon erstreckende Schenkel 8. Die Schenkel 8 besitzen die Form von Stoßflächen zwischen Ölwanne und Motorblock eines Verbrennungsmotors und sind aus diesem Grund mit einer Reihe von Löchern 3 versehen, die in den Stoßflächen zwischen Ölwanne und Motorblock mündenden und miteinander fluchtenden Bohrungen für Schraubbolzen entsprechen, wobei die Schraubbolzen zum Verspannen von Ölwanne und Motorblock dienen. Der ebenfalls mit Löchern 3 versehene Mittelabschnitt 7 entspricht in seiner Form der entsprechenden, mit Bohrungen für Schraubbolzen versehenen Stoßfläche des Motorblocks zum Anbringen eines Stirndeckels.

Zwischen dem Mittelabschnitt 7 und den beiden Schenkeln 8 befindet sich jeweils ein eingeschnürter Verbindungssteg 9, in dessen Bereich der Mittelabschnitt 7 dann um 90° gegenüber den beiden Schenkeln 8 aufgebogen wird.

Entlang des Mittelabschnitts 7 als auch entlang der Schenkel 8 ist vorzugsweise jeweils eine langgestreckte, elastisch verformbare Sicke 4 eingeformt, die insbesondere innenseitig von den Löchern 3 verläuft. Die Sikken 4 werden beim Verspannen von Motorblock und Ölwanne durch Anziehen der Schraubbolzen abgeflacht und bilden daher eine Linienabdichtung entlang der Stoßflächen. Entsprechend erfolgt hierdurch eine Linienabdichtung zwischen der Stoßfläche eines entsprechenden Flansches des Motorblocks zum Stirndeckel. Die Elastomerbeschichtung des Flachdichtungsteils 1 dient hierbei wie bei der Ausführungsform von Fig. 1 zur Mikroabdichtung.

Benachbart zum Mittelabschnitt 7 befindet sich jeweils eine, den jeweiligen Schenkel 8 verlängernde, schmale Lasche 10. An den Laschen 10 ist ein Elastomerdichtungsabschnitt 11 befestigt. Der Elastomerdichtungsabschnitt 11 dient zum Einlegen in eine Aufnahmenut eines halbkreisförmigen, stirnseitigen Durchtritts der Ölwanne, der mit dem Stirndeckel zu verschließen ist. Hierbei wird der kreisförmige Stirndeckel einerseits in den halbkreisförmigen Durchtritt der Ölwanne eingesetzt und zu letzterer hin durch den Elastomerdichtungsabschnitt 11 abgedichtet und andererseits in Anlage an die halbkreisförmige Stoßfläche des entsprechenden Flansches des Motorblocks gebracht und beim Verspannen gegenüber diesem mittels Schraubbolzen durch den Mittelabschnitt 7 des Flachdichtungsteils 1 abgedichtet.

Der Elastomerdichtungsabschnitt 11, der beispielsweise einen im wesentlichen 8-förmigen Querschnitt aufweisen kann, ist mit den Laschen 10 kraft- und/oder formschlüssig verbunden. Beispielsweise ist er mit den Laschen 10 verklebt und/oder mit endseitigen Aufnahmeöffnungen zum verankernden Einstecken (Einknüpfen) der Laschen 10 versehen bzw. anvulkanisiert.

Wenigstens ein Loch 3 in jedem Schenkel 8 ist zweckmäßigerweise mit einem in eine an der Stoßfläche etwa der Ölwanne mündenden Bohrung zur Aufnahme eines Schraubbolzens einsetzbaren Kragen 12 versehen, der insbesondere durch Ziehen hergestellt ist. Diese Kragen 12 dienen als Montagehilfe zum genauen Lokalisieren der Dichtung.

Entsprechend sind zweckmäßigerweise ein oder mehrere Löcher 3 des Flachdichtungsteils 1 der Ausführungsform von Fig. 1 mit einem Kragen 12 versehen.

Außerdem ist es zweckmäßig, außenseitig an den Schenkeln 8 Befestigungslaschen 13 vorzusehen, die zum Fixieren der Dichtung an der Ölwanne um den deren Stoßfläche bildenden Flansch gebogen werden können. Die Befestigungslaschen 13 sind vorzugsweise möglichst benachbart zu den Kragen 12 angeordnet.

Entsprechend kann auch das Flachdichtungsteil 1 von Fig. 1 mit Befestigungslaschen 13 versehen sein.

Wenn zwei an gegenüberliegenden Seiten der Ölwanne angeordnete Stirndeckel bzw. entsprechende Durchtritte vorgesehen sind, kann die Dichtung entsprechend einen zweiten Mittelabschnitt 7, hierzu benachbarte Laschen 10 und einen zweiten Elastomerdichtungsabschnitt 11 aufweisen. Anstelle eines Stirndeckels kann der Durchtritt auch ein anderes Bauteil, etwa eine Welle o.dgl. aufnehmen.

Ferner ist im Bereich der abzudichtenden T-Stellen, und zwar dort, wo Zylinderblock, Ölwanne und Stirndeckel zusammenstoßen, das Flachdichtungsteil 1 zusätzlich mit einem plastisch verformbaren Dichtungsmaterial 5, insbesondere Silikon, das gegebenenfalls von einer Tasche 6 aufgenommen wird, beschichtet.

Die Schenkel 8 können miteinander durch den Elastomerdichtungsabschnitt 11 verbunden und zusammen mit einem Flachdichtungsteil 1 gemäß Fig. 1 anstelle der Dichtung von Fig. 2 verwendet werden.

## Patentansprüche

1. Metall-Flachdichtung für zwei mittels Schraubbolzen an ihren Stoßflächen miteinander zu verspannenden Teile insbesondere eines Verbrennungsmotors, mit einem aus einem Metallblech bestehenden Flachdichtungsteil (1), das eine zu den abzudichtenden Stoßflächen korrespondierende, mit Löchern (3) für die Schraubbolzen versehene Form aufweist und mit wenigstens einem Öffnungsbereich (2) sowie einer den Öffnungsbereich (2) vorzugsweise umgebenden Sicke (4) versehen ist, dadurch **gekennzeichnet,** daß das Flachdichtungsteil (1) oberflächenbeschichtet und im Bereich von abzudichtenden T-Stellen vorzugsweise in Taschen mit einem plastisch verformbaren Dichtungsmaterial (5) derart beschichtet ist, daß bei der Montage das Dichtungsmaterial (5) in die angrenzenden Bereiche des Flachdichtungsteils (1) gedrückt wird.

2. Metall-Flachdichtung nach Anspruch 1, dadurch gekennzeichnet, daß das plastisch verformbare Dichtungsmaterial (5) Silikon ist.

3. Metall-Flachdichtung nach Anspruch 1 oder 2, dadurch gekennzeichnet, daß das plastisch verformbare Dichtungsmaterial (5) von einer Tasche (6) aufgenommen ist.

4. Metall-Flachdichtung nach einem der Ansprüche 1 bis 3, dadurch gekennzeichnet, daß die Sicke (4) zum abzudichtenden Medium hin innenseitig von den Löchern (3) für die Schraubbolzen verläuft.

5. Metall-Flachdichtung nach einem der Ansprüche 1 bis 4, dadurch gekennzeichnet, daß wenigstens ein Loch (3) mit einem in eine Bohrung für einen Schraubbolzen einsetzbaren Kragen (12) versehen ist.

6. Metall-Flachdichtung nach einem der Ansprüche 1 bis 5, dadurch gekennzeichnet, daß außenseitig Befestigungslaschen (13) zum Festklemmen der Dichtung an einem der zu verspannenden Teile angeordnet sind.

7. Metall-Flachdichtung nach Anspruch 6, dadurch gekennzeichnet, daß die Befestigungslaschen (13) benachbart zu den Löchern (3) mit dem Kragen (12) angeordnet sind.

8. Metall-Flachdichtung nach einem der Ansprüche 1 bis 7, dadurch gekennzeichnet, daß das Flachdichtungsteil (1) aus Stahl, insbesondere Federstahl, besteht.

9. Metall-Flachdichtung nach einem der Ansprüche 1 bis 8, zur Anordnung zwischen den Stoßflächen eines Motorblocks und einer Ölwanne eines Verbrennungsmotors, wobei an wenigstens einer Stirnseite ein kreisförmiger Durchtritt, der sich jeweils zur Hälfte über die Ölwanne und den Motorblock erstreckt, für ein einzusetzendes Teil und Ölwannenseitig eine halbkreisförmige Aufnahmenut vorgesehen sind, und wobei die Ölwanne und der Motorblock über sich durch entsprechende an den Stoßflächen mündende Bohrungen erstreckende Schraubbolzen miteinander verbindbar sind und ein Elastomerdichtungsabschnitt (11) zum Einlegen in die wenigstens eine Aufnahmenut des Durchtritts der Ölwanne vorgesehen ist, dadurch gekennzeichnet, daß das Flachdichtungsteil (1) zwei Schenkel (8) umfaßt, die benachbart zum Durchtritt jeweils eine Lasche (10) aufweisen, an denen der Elastomerdichtungsabschnitt (11) befestigt ist.

10. Metall-Flachdichtung nach Anspruch 9, dadurch gekennzeichnet, daß die Schenkel (8) durch einen mit einer Sicke (6) versehenen Mittelabschnitt (2) einer Form entsprechend einem halbkreisförmigen Flansch benachbart zum Durchtritt zusätzlich miteinander verbunden sind.

11. Metall-Flachdichtung nach Anspruch 9 oder 10, dadurch gekennzeichnet, daß der Elastomerdichtungsabschnitt (11) form- und/oder kraftschlüssig mit den Laschen (10) verbunden ist.

12. Metall-Flachdichtung nach Anspuch 11, dadurch gekennzeichnet, daß der Elastomerdichtungsabschnitt (11) durch Kleben mit den Laschen (10) verbunden ist.

13. Metall-Flachdichtung nach Anspruch 11 oder 12, dadurch gekennzeichnet, daß der Elastomerdichtungsabschnitt (11) durch Einknüpfen mit den Laschen (10) verbunden ist.

14. Metall-Flachdichtung nach Anspruch 11 oder 12, dadurch gekennzeichnet, daß der Elastomerdichtungsabschnitt (11) durch Anvulkanisieren mit den Laschen (10) verbunden ist.

## Claims

1. Flat metal gasket for two parts, in particular of an internal combustion engine, to be clamped one against the other at their abutment surfaces by means of screw-bolts, with a flat gasket part (1) consisting of a metal sheet, which has a shape corresponding to the abutment surfaces to be sealed and provided with holes (3) for the screw-bolts and is provided with at least one opening region (2) as well as a reinforcing seam (4) preferably surrounding the opening region (2), characterised in that the flat gasket part (1) is surface-coated and in the region of the T-points to be sealed is coated preferably in pockets with a sealing material (5) capable of plastic deformation so that at the time of assembly the sealing material (5) is pushed into the adjoining region of the flat gasket part (1).

2. Flat metal gasket according to Claim 1, characterised in that the sealing material (5) capable of plastic deformation is silicone.

3. Flat metal gasket according to Claim 1 or 2, characterised in that the sealing material (5) capable of plastic deformation is received by a pocket (6).

4. Flat metal gasket according to one of Claims 1 to 3, characterised in that the reinforcing seam (4) extends towards the medium to be sealed on the inside of the holes (3) for the screw-bolts.

5. Flat metal gasket according to one of Claims 1 to 4, characterised in that at least one hole (3) is provided with a collar (12) able to be inserted in a bore for a screw-bolt.

6. Flat metal gasket according to one of Claims 1 to 5, characterised in that located on the outside are mounting straps (13) for fixing the gasket on one of the parts to be clamped.

7. Flat metal gasket according to Claim 6, characterised in that the mounting straps (13) are located adjacent to the holes (3) with the collar (12).

8. Flat metal gasket according to one of Claims 1 to 7, characterised in that the flat gasket part (1) consists of steel, in particular spring steel.

9. Flat metal gasket according to one of Claims 1 to 8, for location between the abutment surfaces of an engine block and oil sump of an internal combustion engine, on at least one end face a circular passage, which extends respectively half way across the oil sump and the engine block, for a part to be inserted and on the oil sump side a semi-circular receiving groove being provided and the oil sump and the engine block being able to be connected to each other by way of screw-bolts extending through corresponding bores opening out on the abutment surfaces and an elastomer gasket section (11) being provided for insertion in at least one receving groove of the passage of the oil sump, characterised in that the flat gasket part (1) comprisies two legs (8), which adjacent to the passage respectively comprise a tongue (10), to which the elastomer gasket section (11) is attached.

10. Flat metal gasket according to Claim 9, characterised in that the legs (8) are additionally connected to each other by a central section provided with a reinforcing seam (6) and having a shape corresponding to a semi-circular flange, adjacent to the passage.

11. Flat metal gasket according to Claim 9 or 10, characterised in that the elastomer gasket section (11) is connected to the tongues (10) in a form-locking and/or force-locking manner.

12. Flat metal gasket according to Claim 11, characterised in that the elastomer gasket section (11) is connected to the tongues (10) by sticking.

13. Flat metal gasket according to Claim 11 or 12, characterised in that the elastomer gasket section (11) is connected to the tongues (10) by tying.

14. Flat metal gasket according to Claim 11 or 12, characterised in that the elastomer gasket section (11) is connected to the tongues (10) by vulcanisation.

## Revendications

1. Joint métallique plat destiné à être inséré entre deux éléments à assembler par des boulons filetés au niveau de leur surface de jonction, notamment d'un moteur à combustion interne, comprenant un élément de joint plat (1) réalisé à partir d'une tôle métallique, ledit élément présentant un profil correspondant à celui des surfaces de jonction à assembler de manière étanche et muni de trous (3) pour les boulons filetés, ainsi qu'au moins une zone d'ouverture (2) et une cabosse (4) ménagée de préférence le long de ladite zone d'ouverture (2), caractérisé en ce que l'élément de joint plat (1) comporte un revêtement de surface et, au voisinage de zones en T à étanchéifier, comporte un revêtement en matériau d'étanchéité (5) déformable plastiquement, de préférence en cuvettes, de sorte que le matériau d'étanchéité (5) soit pressé lors du montage dans les zones adjacentes de l'élément de joint plat (1).

2. Joint métallique plat selon la revendication 1, caractérisé en ce que le matériau d'étanchéité (5) déformable plastiquement est du silicone.

3. Joint métallique plat selon la revendication 1 ou 2, caractérisé en ce que le matériau d'étanchéité (5) déformable plastiquement est reçu dans une cuvette (6).

4. Joint métallique plat selon l'une quelconque des revendications 1 à 3, caractérisé en ce que la cabosse (4) est disposée côté fluide à étanchéifier, sur le côté intérieur par rapport aux trous (3) ménagés pour les boulons filetés.

5. Joint métallique plat selon l'une quelconque des revendications 1 à 4, caractérisé en ce qu'au moins un trou (3) est muni d'un bord tombé (12) pouvant être inséré dans l'un des alésages ménagés pour les boulons filetés.

6. Joint métallique plat selon l'une quelconque des revendications 1 à 5, caractérisé en ce qu'il est prévu des pattes de fixation (13) externes permettant de caler le joint sur l'un des éléments à assembler.

7. Joint métallique plat selon la revendication 6, caractérisé en ce que les pattes de fixation sont agencées à proximité des trous (3) munis de bords tombés (12).

8. Joint métallique plat selon l'une quelconque des revendications 1 à 7, caractérisé en ce que l'élément de joint plat (1) est réalisé en acier, notamment en acier à ressorts.

9. Joint métallique plat selon l'une quelconque des revendications 1 à 8, destiné à être disposé entre les surfaces de jonction d'un bloc moteur et d'un carter d'huile d'un moteur à combustion interne, dans lequel sont prévus, sur au moins une face frontale, un passage circulaire pour une pièce à insérer, lequel passage s'étend pour moitié respectivement sur le carter d'huile et sur le bloc moteur, et, au niveau du carter d'huile, une gorge de réception semi-circulaire, et dans lequel, d'une part, le carter d'huile et le bloc moteur peuvent être assemblés par des boulons filetés s'étendant à travers des alésages appropriés débouchant au niveau des surfaces de jonction et, d'autre part, il est prévu une partie de joint élastomère (11) pouvant être disposée dans la gorge de réception du passage du carter d'huile, caractérisé en ce que l'élément de joint plat (1) comporte deux branches (8) qui sont respectivement munies, au voisinage du passage, d'une patte (10) sur laquelle est fixée la partie de joint élastomère (11).

10. Joint métallique plat selon la revendication 9, caractérisé en ce que les branches (8) sont également reliées entre elles par une partie centrale (2) munie d'une cabosse (6), de forme correspondant à celle d'une bride semi-circulaire adjacente au passage.

11. Joint métallique plat selon la revendication 9 ou 10, caractérisé en ce que la partie de joint élastomère (11) est fixée aux pattes (10) par assemblage mécanique et/ou à force.

12. Joint métallique plat selon la revendication 11, caractérisé en ce que la partie de joint élastomère (11) est fixée aux pattes (10) par collage.

13. Joint métallique plat selon la revendication 11 ou 12, caractérisé en ce que la partie de joint élastomère (11) est fixée aux pattes (10) par nouage.

14. Joint métallique plat selon la revendication 11 ou 12, caractérisé en ce que la partie de joint élastomère (11) est fixée aux pattes (10) par début de vulcanisation.
